# EUROPÄISCHE PATENTSCHRIFT

(11) **EP 1 606 530 B1**
(45) Veröffentlichungstag und Bekanntmachung des Hinweises auf die Patenterteilung: **05.03.2008**
(21) Anmeldenummer: 04721510.8
(22) Anmeldetag: 18.03.2004
(51) Int. Cl.: F16D 55/227

(54) **SCHEIBENBREMSE, INSBESONDERE FÜR NUTZFAHRZEUGE**
DISK BRAKE, ESPECIALLY FOR COMMERCIAL VEHICLES
FREIN A DISQUE DESTINE NOTAMMENT A DES VEHICULE UTILITAIRES

(30) Priorität: 18.03.2003 DE 10311896
(43) Veröffentlichungstag der Anmeldung: 21.12.2005
(73) Patentinhaber: KNORR-BREMSE SYSTEME FÜR NUTZFAHRZEUGE GMBH, 80809 München (DE)
(72) Erfinder: MACKE, Wlodzimierz, 82140 Olching (DE); GRUBER, Robert, 82140 Olching (DE)
(74) Vertreter: Mattusch, Gundula
(86) Internationale Anmeldenummer: PCT/EP2004/002804
(87) Internationale Veröffentlichungsnummer: WO 2004/083665

(56) Entgegenhaltungen:
- WO-A-03/025413
- PATENT ABSTRACTS OF JAPAN Bd. 0040, Nr. 96 (M-020), 11. Juli 1980 (1980-07-11) & JP 55 054732 A (HOSEI BRAKE KOGYO KK), 22. April 1980 (1980-04-22)

## Beschreibung

Die vorliegende Erfindung betrifft eine Scheibenbremse, insbesondere für ein Nutzfahrzeug, gemäß dem Oberbegriff des Anspruchs 1.

Bei derartigen Scheibenbremsen wird der Bremssattel durch Befestigungselemente mit dem Bremsträger, der an das Fahrzeug angeschlossen ist, verbunden. Dabei greifen Führungsholme in den Bremsträger ein, die andererseits in Gleitlagern des Bremssattels so geführt sind, so daß eine axiale Verschiebung des Bremssattels zum ortsfesten Bremsträger möglich ist. Von den Gleitlagern ist eines als Festlager mit geringem Gleitspiel ausgebildet, während das andere als Loslager fungiert, wodurch insbesondere Fertigungstoleranzen ausgeglichen werden.

Um einen solchen Ausgleich zu erreichen, ist es bekannt, die Gleitbuchse mit einer im Querschnitt im weitesten Sinne ovalen Bohrung zu versehen, wobei sich die größte Breite dieser Bohrung quer zur Achsrichtung erstreckt, so daß ein seitliches Auswandern des Führungsholms in beide Richtungen zur Mittellängsachse möglich ist. Senkrecht dazu ist ebenso wie beim Festlager insgesamt kein oder nur ein sehr geringes Spiel vorgesehen.

Das Dokument JP 55054732 offenbart eine Scheibenbreinse in wesentlichen gemäss dem Oberbegriff des Anspruchs 1.

Für die volle Funktionsfähigkeit der Gleitbuchse ist jedoch eine dauerhafte exakte Positionierung erforderlich, wozu sowohl eine axiale Verschiebesicherung wie auch eine Verdrehsicherung zählt.

In der Serienfertigung wird eine solche lagegenaue Fixierung beispielsweise dadurch erreicht, daß die Gleitbuchse mit dem Bremssattel verstemmt wird. Auch ist es bekannt, die Gleitbuchse mit einem Preßsitz im Bremssattel zu halten. Hierzu stehen bei der Serienfertigung geeignete Werkzeuge zur Verfügung, die ein entsprechend lagegenaues Einsetzen problemlos ermöglichen.

Hingegen ist ein solches positionsgenaues Montieren der Gleitbuchse bei einem reparaturbedingten Austausch nicht gewährleistet, so daß es hier bislang durchaus zu Fehlstellungen der Gleitbuchse kommt, die zu Funktionsproblemen führen können.

In jedem Fall ist das Einbringen der Gleitbuchsen in eine vorbestimmte Stellung ebenso wie deren Sicherung in dieser Stellung nur mit erheblichem Aufwand zu realisieren.

Der Erfindung liegt daher die Aufgabe zugrunde, eine Scheibenbremse der gattungsgemäßen Art so weiter zu entwickeln, daß in jedem Fall ein problemloses Einbringen und dauerhaftes Fixieren in jede mögliche Bewegungsrichtung der Gleitbuchse mit konstruktiv einfachen Mitteln möglich ist.

Diese Aufgabe wird durch eine Scheibenbremse gelöst, die die Merkmale des Anspruchs 1 aufweist.

Durch die erfindungsgemäße Ausbildung der Gleitbuchse des Loslagers einer Scheibenbremse wird gewährleistet, daß bei einem kompletten Zusammenbau die Gleitbuchse mit Sicherheit die richtige vorbestimmte Lage einnimmt, so daß die Funktionsfähigkeit des Loslagers uneingeschränkt gegeben ist.

Dabei kann das Fixierelement aus mindestens einer Fixierlasche bestehen, die in Gebrauchsstellung des Loslagers über die äußere Mantelfläche der Gleitbuchse hinausragt und in einer Ausnehmung der bremssattelseitigen Bohrung einliegt.

Vor einer Korrespondenz mit der Ausnehmung der Bohrung, die als Tasche ausgebildet sein kann, ragt die Fixierlasche in die Innenbohrung der Gleitbuchse und versperrt dadurch einen freien Durchgang des Führungsholms. Bei einem Einbau des Führungsholms muß also die Fixierlasche in die Ausnehmung der Bohrung hineinragen, um einen freien Durchgang für den Führungsholm zu schaffen. Auf diese Art und Weise ist praktische eine Doppelsicherung dafür gegeben, daß die Gleitbuchse bei einem kompletten Zusammenbau sowohl die vorbestimmte Lage einnimmt wie auch in dieser Position fixiert bleibt.

Vor allem bei Wartungs- bzw. Reparaturarbeiten kommt dieser Gegebenheit eine besondere Bedeutung zu, da Fehleinbauten praktisch ausgeschlossen sind.

Prinzipiell kann die Anzahl der Fixierelemente, d.h. der Fixierlaschen, beliebig groß sein, wobei diese entsprechend den Anforderungen bezüglich der notwendigen Haltekraft zu wählen sind.

Eine einfache Montage wird durch eine möglichst geringe Anzahl von Fixierlaschen gesichert, vorzugsweise lediglich eine Fixierlasche, während bei hohen Axial- und/oder Drehkräften mehrere Fixierlaschen vorgesehen werden.

Auch die Form der Fixierlaschen ist prinzipiell frei wählbar. Allerdings müssen diese so gestaltet sein, daß sie ein Durchschieben der des Führungsholms, d. h. messen Montage zuverlässig verhindern, wenn die Fixierlaschen nicht in den Ausnehmungen der Bohrung einliegen.

Die Fixierlaschen und die diesen zugeordneten Ausnehmungen, vorzugsweise in Form von Taschen, sind in ihrer Form und Dimensionierung so aufeinander abgestimmt, daß sich bei Korrespondenz miteinander ein weitgehender Formschluß ergibt, durch den sowohl eine umfängliche wie auch eine axiale Arretierung der Gleitbuchse gewährleistet ist.

Insgesamt ergibt sich daraus nicht nur ein Sicherheits-, sondern auch ein erheblicher Montagevorteil, da der Einbau der Gleitbuchse nunmehr wesentlich einfacher und schneller vonstatten geht. Dies insbesondere bei einem wartungsbedingten Wechsel der Gleitbuchse, bei der die bei einer Serienmontage zur Verfügung stehenden Werkzeuge weder zur Verfügung stehen, noch einsetzbar sind.

Nach einem weiteren Gedanken der Erfindung ist vorgesehen, die Fixierlaschen einstückig aus der Gleitbuchse zu formen. Dabei ragen, wie erwähnt, zunächst die Fixierlaschen in den durch die Innenbohrung gebildeten Raum und werden dann in die Ausnehmung der Bohrung gebogen, bis sie an der Ausnehmungswandung so anliegen, daß eine Bewegung der Gleitbuchse in jeder Richtung ausgeschlossen ist. In dieser Stellung ist der Durchgang der Innenbohrung für den einzusetzenden Führungsholm frei durchgängig.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teillängsschnitt durch eine erfindungsgemäße Scheibenbremse,
- Figur 2: eine Einzelheit der Scheibenbremse gesehen in Richtung II-II in Figur 1,
- Figur 3: eine Gleitbuchse der Scheibenbremse in unvollständig montierter Stellung in einer Draufsicht,
- Figur 4: die Gleitbuchse nach Figur 3 in vollständig montierter Position, ebenfalls in einer Draufsicht,
- Figur 5: ein weiteres Ausführungsbeispiel einer Gleitbuchse in einer Draufsicht,
- Figur 6: die Gleitbuchse nach Figur 5 in einer Seitenansicht.

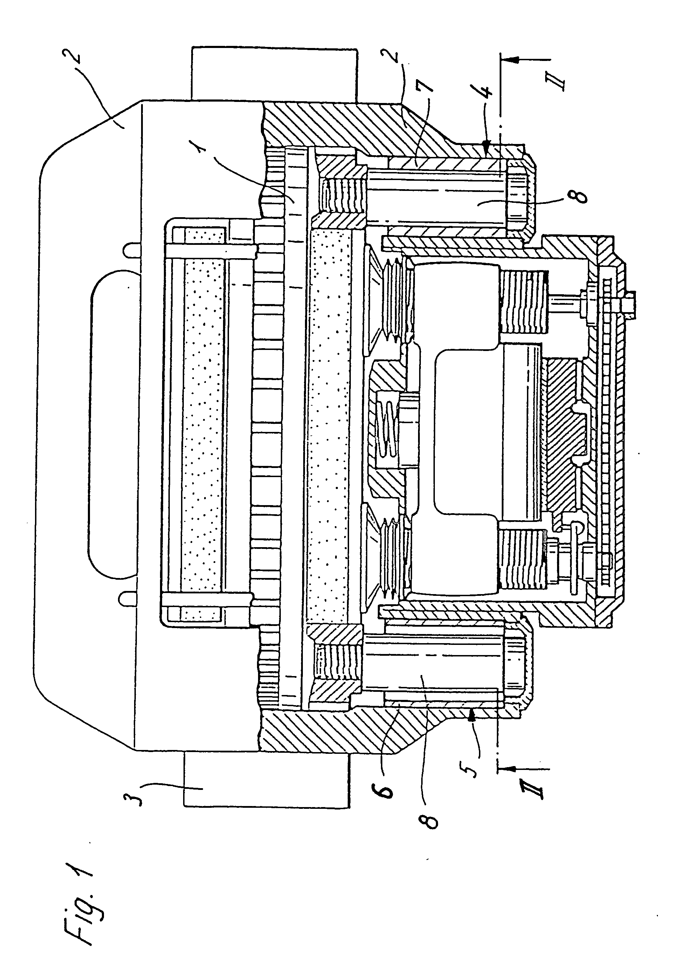

In der Figur 1 ist eine Scheibenbremse, insbesondere für ein Nutzfahrzeug dargestellt, die in ihrem Grundaufbau einen Bremssattel 2 aufweist, der eine innenbelüftete Bremsscheibe 1 umfaßt, die an einer nicht dargestellten Achse des Nutzfahrzeuges befestigt ist.

Der Bremssattel 2 ist an einem Bremsträger 3 des Nutzfahrzeuges, bezogen auf die Bremsscheibe 1, axial verschiebbar angeordnet.

Hierzu sind zwei Befestigungselemente 4, 5 vorgesehen, von denen das Befestigungselement 5 als Loslager und das Befestigungselement 4 als Festlager ausgebildet ist.

Beide Befestigungselemente 4, 5 weisen jeweils eine Gleitbuchse 6, 7 sowie einen darin geführten Führungsholm 8 auf, wobei die außenumfänglich runden Gleitbuchsen 6, 7 in runde Bohrungen des Bremssattels 2 eingepreßt sind.

Die Führungsholme 8 sind in den Bremsträger 3 eingeschraubt und somit gegenüber dem Bremssattel 2 ortsfest, während die Gleitbuchsen 6, 7 fest mit dem Bremssattel 2 verbunden sind und von daher auf dem Lagerbolzen 8 zusammen mit dem Bremssattel 2 axial verschiebbar gelagert sind.

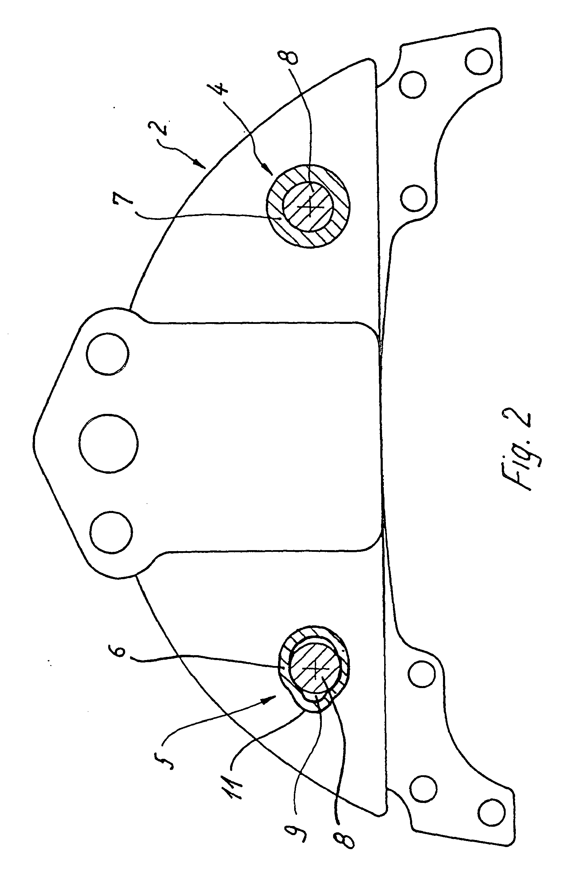

Wie insbesondere die Figur 2 sehr deutlich zeigt, weist die Gleitbuchse 6 des Loslagers 5 eine im Querschnitt von der Kreisform abweichende, im vorliegenden Ausführungsbeispiel etwa ovale Innenbohrung 9 auf, deren größte Weite sich in der Ebene erstreckt, auf der das Festlager 4 liegt.

Das kleinste Abmaß, das senkrecht zum größten Abmaß der Innenbohrung 9 vorliegt, entspricht etwa dem Durchmesser des runden Führungsholms 8. Somit ergibt sich ein seitliches Spiel des Führungsholms 8 zur Innenbohrung 9.

Demgegenüber ist die Gleitbuchse 7 des Festlagers 4 als zylindrischer Hohlkörper ausgebildet, indem der zylindrische Führungsholm 8 mit so geringem Spiel geführt ist, daß eine einwandfreie axiale Verschiebung der Gleitbuchse 7 und damit des Bremssattels 2 möglich ist.

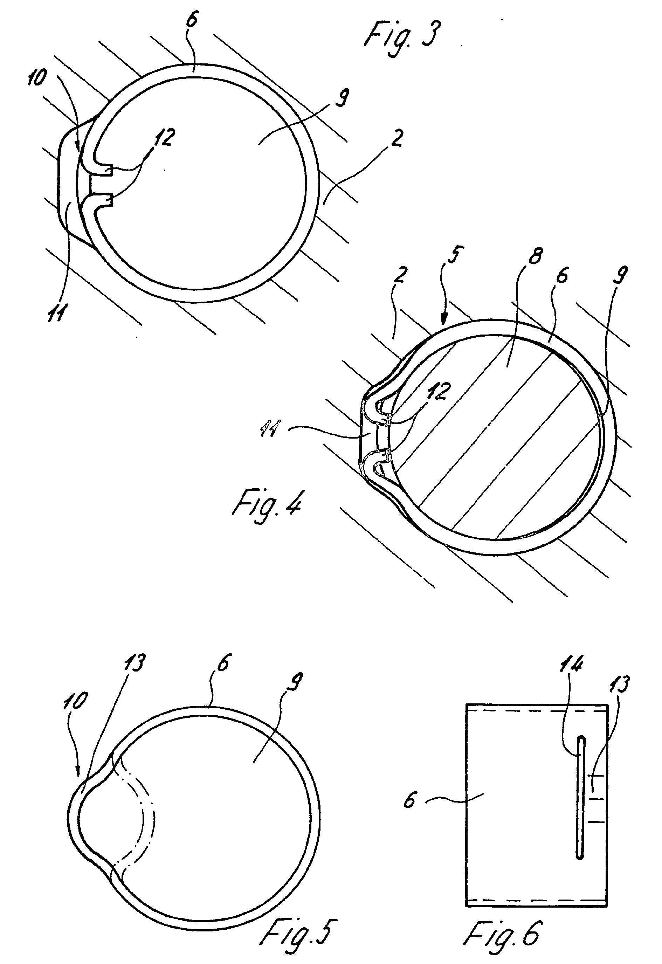

Wie weiter aus der Figur 2, jedoch besonders deutlich in den Figuren 3 und 4 erkennbar ist, weist die Gleitbuchse 6 des Loslagers 5 ein Fixierelement 10 auf, das bei lagegenauer Montage der Gleitbuchse 6 in einer Ausnehmung 11 der Bohrung des Bremssattels 2 einliegt und die Gleitbuchse 6 dadurch sowohl in axialer wie auch in Drehrichtung fixiert.

Dabei ist die Ausnehmung 11 taschenförmig ausgebildet, während das Fixierelement 10 bei dem in den Figuren 3 und 4 gezeigten Beispiel als zwei Fixierlaschen 12 ausgebildet ist, die vor einem Eindrücken in die Ausnehmung 11 hakenförmig in die Innenbohrung 9 der Gleitbuchse 6 ragen.

Erst durch ein Biegen der Fixierlaschen 12 in die Ausnehmung 11 wird die Innenbohrung 9 so weit freigegeben, daß der Führungsholm 8 problemlos in die Innenbohrung 9 eingeschoben werden kann.

Eine besonders einfache Herstellung der erfindungsgemäßen Gleitbuchse 6 erlaubt das Ausführungsbeispiel gemäß den Figuren 5 und 6.

Hier besteht das Fixierelement 10 aus einer durchgehenden, etwa kreisbogenförmigen Fixierlasche, die in noch nicht vollständig montierter Stellung, entsprechend der strichpunktiert dargestellten Position, in den durch die Innenbohrung 9 definierten Raum ragt, während sie in Fixierstellung, in Figur 5 als Vollinie dargestellt als konvexe Ausstülpung in die Ausnehmung 11 ragt.

Da die Gleitbuchse 6 aus Metall besteht, stellt das Eindrücken des Fixierelementes 10 in die Ausnehmung 11 durch die plastische Verformung eine dauerhafte, sich über die gesamte Lebensdauer der Gleitbuchse 6 erstreckende Arretierung dar.

Die Herstellung des Fixierelementes 10 ist insbesondere bei dem in der Figur 5 gezeigten Ausführungsbeispiel sehr einfach. Wie in der Figur 6 erkennbar, ist etwa in einem der beiden Randbereiche ein Schlitz 14 in die Wandung der Gleitbuchse 6 eingebracht, durch den eine problemlose Formgebung des Fixierelementes 120 möglich ist, das zwischen dem Schlitz 14 und der zugeordneten Stirnseite der Gleitbuchse 6 positioniert ist.

Je nach Bedarf sind selbstverständlich auch andere Formen der Fixierelemente 10 denkbar, ebenso wie eine Mehrzahl, je nach Beanspruchung der Gleitbuchse 6 hinsichtlich einer axialen und Verdrehsicherung.

In jedem Fall ist die Ausnehmung 11 (Tasche), insbesondere ein der Bohrung des Bremssattels 2 der Endform des Fixierelementes 10 in etwa angepaßt, so daß eine weitgehend spielfreie Sicherung in beiden möglichen Bewegungsrichtungen gewährleistet ist.

### Bezugszeichenliste

- 1.: Bremsscheibe
- 2.: Bremssattel
- 3.: Bremsträger
- 4.: Befestigungselement
- 5.: Befestigungselement
- 6.: Gleitbuchse
- 7.: Gleitbuchse
- 8.: Führungsholm
- 9.: Innenbohrung
- 10.: Fixierelement
- 11.: Ausnehmung
- 12.: Fixierlaschen

## Patentansprüche

1. Scheibenbremse, für ein Nutzfahrzeug, mit einem eine Bremsscheibe (1) umfassenden Bremssattel (2), der an einem Bremsträger (3) des Nutzfahrzeuges mittels zweier Befestigungselemente, bezogen auf die Bremsscheibe (1) axial verschiebbar befestigt ist, wobei ein Befestigungselement als Festlager (4) und das andere als Loslager (5) mit einer in eine Bohrung des Bremssattels (2) eingesetzten Gleitbuchse (6), deren innere und/oder äußere Kontur von der Kreisform abweicht, ausgebildet ist und in der Gleitbuchse (6) ein im Querschnitt beispielsweise runder Führungsholm (8) geführt ist, **dadurch gekennzeichnet, daß** die Gleitbuchse (6) des Loslagers (5) mit mindestens einem Fixierelement (10) versehen ist, das bei lagegenauer Montage der Gleitbuchse (6), diese fixierend, in einer Ausnehmung (11) der Bohrung einliegt.

2. Scheibenbremse nach Anspruch 1, **dadurch gekennzeichnet, daß** das Fixierelement (10) aus mindestens einer Fixierlasche (12, 13) besteht, die als Bestandteil der Gleitbuchse (6) unter plastischer Verformung in die Ausnehmung (11) eingedrückt ist.

3. Scheibenbremse nach Anspruch 2, **dadurch gekennzeichnet, daß** die Fixierlasche (13) in Gebrauchsstellung eine konvexe Außenkontur aufweist.

4. Scheibenbremse nach Anspruch 2, **dadurch gekennzeichnet, daß** zwei Fixierlaschen (12) vorgesehen sind, die in Gebrauchsstellung jeweils in der Ausnehmung (11) einliegen.

5. Scheibenbremse nach einem der Ansprüche 1 bis 4, **dadurch gekennzeichnet, daß** das Fixierelement (10) in Nichtgebrauchsposition in einen Bereich der Innenbohrung (9) ragt, der vom Querschnitt der eingeschobenen Führungshülse (8) definiert ist.

6. Scheibenbremse nach einem der Ansprüche 1 bis 4, **dadurch gekennzeichnet, daß** das Fixierelement (10) bei einer in der Ausnehmung (11) einliegenden Gebrauchsstellung außerhalb des durch den Querschnitt des eingeschobenen Führungsholmes (8) definierten Bereich liegt.

7. Scheibenbremse nach einem der Ansprüche 1 bis 6, **dadurch gekennzeichnet, daß** das Fixierelement (10) einstückig mit der Gleitbuchse (6) im übrigen verbunden ist.

8. Scheibenbremse nach Anspruch 1, **dadurch gekennzeichnet, daß** das Fixierelement (10) formschlüssig in der Ausnehmung (11) einliegt.

9. Scheibenbremse nach Anspruch 8, **dadurch gekennzeichnet, daß** die Gleitbuchse (6) durch Einliegen des Fixierelementes (10) in der Ausnehmung (11) gegen eine axiale und Drehbewegung gesichert ist.

10. Scheibenbremse nach einem der Ansprüche 1 bis 9, **dadurch gekennzeichnet, daß** zur Bildung des Fixierelementes (10) die Gleitbuchse (6) in zumindest in einem ihrer beiden Randbereiche mindestens einen verlaufenden Schlitz (14) aufweist und das Sicherungselement (10) durch Verformung des zwischen der äußeren Stirnseite und dem Schlitz (14) gebildeten Bereiches hergestellt ist.

11. Scheibenbremse nach einem der Ansprüche 1 bis 10, **dadurch gekennzeichnet, daß** das Fixierelement (10) in dem Bereich der Wandung der Gleitbuchse (6) angeordnet ist, der das größte Querschnittsabmaß der Innenbohrung (9) aufweist.

## Claims

1. A disc brake for commercial vehicles having a brake calliper comprising a brake disc (1) which is fixed to an adapter (3) of the commercial vehicle by means of two fixing elements such that it can be moved axially in relation to the brake disc (1), one fixing element being designed as a fixed bearing (4) and the other as a movable bearing (5) with a sliding bush (6) inserted into a hole in the brake calliper (2) with an inner and/or outer contour which deviates from the circular, and a guide bar (8) with a round cross-section for example being mounted in the sliding bush (6),
**characterised in that**
the sliding bush (6) of the movable bearing (5) is provided with at least one fixing element (10) which lies in a recess (11) in the hole when the sliding bush (6) is fitted exactly in position, fixing it in place.

2. A disc brake in accordance with claim 1,
**characterised in that**
the fixing element (10) consists of at least one fixing bracket (12, 13) which as part of the sliding bearing (6) is pressed into the recess (11) subject to plastic deformation.

3. A disc brake accordance with claim 2,
**characterised in that**
the fixing bracket (13) has a convex outer contour when in use.

4. A disc brake in accordance with claim 2,
**characterised in that**
two fixing brackets (12) are provided which lie in the recess (11) when in use.

5. A disc brake in accordance with one of claims 1 to 4,
**characterised in that**
when not in use the fixing element (10) projects into an area of the internal hole (9) which is defined by the cross section of the inserted guide bar (8).

6. A disc brake in accordance with one of claims 1 to 4,
**characterised in that**
when in use and located in the recess (11) the fixing element (10) lies outside the area defined by the cross section of the inserted guide bar (8).

7. A disc brake in accordance with one of claims 1 to 6,
**characterised in that**
the fixing element (10) is also connected to the sliding bush (6) in one piece.

8. A disc brake in accordance with claim 1,
**characterised in that**
the fixing element (10) lies in a positive locking connection in the recess (11).

9. A disc brake in accordance with claim 8,
**characterised in that**
the sliding bush (6) is secured against axial and rotational movement by the insertion of the fixing element (10) into the recess (11).

10. A disc brake in accordance with one of claims 1 to 9,
**characterised in that**
in order to form the fixing element (10) the sliding bush (6) has at least one slit (14) in at least one of its two edge areas and the fixing element (10) is produced by the deformation of the area between the outer end and the slit (14).

11. A disc brake in accordance with one of claims 1 to 10,
**characterised in that**
the fixing element (10) is positioned in the area of the wall of the sliding bush (6) which has the greatest cross-sectional dimension of the internal hole (9).

## Revendications

1. Frein à disque pour un véhicule utilitaire, comprenant un étrier de frein (2) renfermant un disque à frein (1), qui est monté à une flasque de frein (3) du véhicule utilitaire moyennant de deux éléments de fixation, à déplacement axial relatif audit disque à frein (1), à un élément de fixation étant configuré sous forme d'un logement fixe (4) et à l'autre élément de fixation étant configuré sous forme d'un logement mobile (5) à une douille de glissement (6) insérée dans un alésage dudit étrier de frein (2), dont le contour intérieur et/ou extérieur varie de la forme de cercle, et à un longeron de guidage étant guidé dans ladite douille de glissement (6), qui a une section transversale ronde, par exemple, **caractérisé en ce que** ladite douille de glissement (6) dudit logement mobile (5) est pourvu d'au moins un élément de fixation (10), qui, à montage à exactitude positionnelle de ladite douille de glissement (6) se pose en un évidement (11) dudit alésage, en fixant la douille.

2. Frein à disque selon la revendication 1, **caractérisé en ce que** ledit élément de fixation (10) est composé d'au moins une éclisse de fixation (12, 13), qui, en tant que composant de ladite douille de glissement (6), est pressée dans ledit évidement (11) et en subit une déformation plastique.

3. Frein à disque selon la revendication 2, **caractérisé en ce qu'**en position d'emploi, ladite éclisse de fixation (13) présente un contour extérieur convexe.

4. Frein à disque selon la revendication 2, **caractérisé en ce que** deux éclisses de fixation (12) sont formées, dont chacune, en position d'emploi, se pose dans ledit évidement (11).

5. Frein à disque selon une quelconque des revendications 1 à 4, **caractérisé en ce qu'**en position hors d'emploi, ledit élément de fixation (10) fait saillie dans une zone dudit alésage intérieur (9), qui est définie par la section transversale de ladite douille de guidage (8) insérée.

6. Frein à disque selon une quelconque des revendications 1 à 4, **caractérisé en ce qu'**au cas d'une position d'emploi et de pose dans ledit évidement (11), ledit élément de fixation (10) se trouve en dehors de la zone définie par la section transversale dudit longeron de guidage (8) inséré.

7. Frein à disque selon une quelconque des revendications 1 à 6, **caractérisé en ce que** ledit élément de fixation (10) est relié, de manière intégrale, à ladite douille de glissement (6) dans tous les autres aspects.

8. Frein à disque selon la revendication 1, **caractérisé en ce que** ledit élément de fixation (10) se pose dans ledit évidement (11) en fermeture géométrique.

9. Frein à disque selon la revendication 8, **caractérisé en ce que** par la pose dudit élément de fixation (10) dans ledit évidement (11), ladite douille de glissement (6) est retenue et protégée contre un mouvement axial et de rotation.

10. Frein à disque selon une quelconque des revendications 1 à 9, **caractérisé en ce que** ladite douille de glissement (6) présente au moins une fente (14) s'étendant en au moins une de ses deux zones marginales afin de former ledit élément de fixation (10), et **en ce que** ledit élément de retenue (10) est constitué par la déformation de la zone formée entre la face extérieure et ladite fente (14).

11. Frein à disque selon une quelconque des revendications 1 à 10, **caractérisé en ce que** ledit élément de fixation (10) est disposé dans la zone de la paroi de ladite douille de glissement (6), qui présente la plus grande dimension en section transversale dudit alésage intérieur (9).
